# EUROPEAN PATENT SPECIFICATION

(11) **EP 1 940 884 B1**
(45) Date of publication and mention of the grant of the patent: **17.06.2009**
(21) Application number: 06816677.6
(22) Date of filing: 10.10.2006
(51) Int. Cl.: C08F 2/06, C08F 220/18, C08F 222/10, C09D 133/06

(54) **HIGH TEMPERATURE POLYMERIZATION PROCESS FOR MAKING BRANCHED ACRYLIC POLYMERS, CAPROLACTONE-MODIFIED BRANCHED ACRYLIC POLYMERS, AND USES THEREOF**
HOCHTEMPERATURPOLYMERISATIONSVERFAHREN ZUR HERSTELLUNG VON VERZWEIGTEN ACRYLPOLYMEREN, CAPROLACTONMODIFIZIERTE VERZWEIGTE ACRYLPOLYMERE UND VERWENDUNGEN DAVON
PROCÉDÉ DE POLYMÉRISATION À HAUTE TEMPÉRATURE SERVANT À FABRIQUER DES POLYMÈRES ACRYLIQUES RAMIFIÉS ET DES POLYMÈRES ACRYLIQUES RAMIFIÉS MODIFIÉS PAR UNE CAPROLACTONE ET UTILISATIONS DE CEUX-CI

(30) Priority: 07.10.2005 US 724500 P; 07.10.2005 US 725058 P
(43) Date of publication of application: 09.07.2008
(73) Proprietor: E.I. DU PONT DE NEMOURS AND COMPANY, Wilmington, DE 19898 (US)
(72) Inventor: JOHNSON, Jeffery, W., Rochester, Michigan 48306 (US)
(74) Representative: DuPont Performance Coatings Biering/Blum/Kimpel
(86) International application number: PCT/US2006/039645
(87) International publication number: WO 2007/044768

(56) References cited:
- WO-A-90/03404
- US-A- 5 362 813
- CONGLING QUAN ET AL: "Product quality improvement in a high-temperature free-radical polymerization reactor" PROCEEDINGS OF THE 2003 AMERICAN CONTROL CONFERENCE. ACC. DENVER, CO, JUNE 4 - 6, 2003, AMERICAN CONTROL CONFERENCE, NEW YORK, NY : IEEE, US, vol. VOL. 6 OF 6, 4 June 2003 (2003-06-04), pages 3980-3985, XP010665729 ISBN: 0-7803-7896-2

## Description

### CROSS-REFERENCE TO RELATED APPLICATION

This application claims priority under 35 U.S.C. §119 from U.S. Provisional Applications Serial Nos. 60/724,500, filed October 7, 2005 and 60/725,058 filed October 7, 2005.

### FIELD OF THE INVENTION

This invention relates to a high temperature polymerization process and products therefrom. In particular, this invention relates to high temperature polymerization process to produce high molecular weight, but low viscosity, branched acrylic and caprolactone-modified branched acrylic polymers suitable for use in high solids type coating compositions, such as high solids coatings useful for finishing automobile and truck exteriors.

### BACKGROUND OF THE INVENTION

Most coatings used for finishing automobile and truck exteriors contain one or more film-forming resins and polymers and significant amounts of volatile organic solvents. The presence of volatile organic solvents is of concern, however, because they form the bulk of the regulated emissions produced during application and curing of the coating composition. Accordingly, there have been many attempts to reduce the emissions or VOC (volatile organic content) of such coatings.

The trend in the industry has been toward higher solids, solvent-based liquid coatings. Such coatings typically have a solids content of at least about 40% by weight (non-volatiles).

High solids coatings offer significant advantages over conventional, solvent-borne (or solvent-thinned) coatings. They do not pollute the air, they reduce or eliminate solvent emissions and, unlike conventional solvent-borne coatings, they do not present significant fire and toxicity problems. High solids coatings also provide substantial advantages over other low emission coatings, such as waterborne and solventless powder systems, in that they offer a better balance of properties in terms of appearance and ease of application in existing paint facilities.

Perhaps the most difficult problem in preparing and utilizing high solids coatings is selection and control of viscosity. The conventionally prepared high molecular weight addition polymers that are commonly utilized in conventional solvent-borne coatings are usually too viscous to be employed for high solids applications. To keep the viscosity of these coatings sufficiently low for practical use, the trend in the industry has been to employ low molecular weight resins or oligomers (Mn 500 to 3000), typically acrylic oligomers due to their excellent durability and weathering resistance. However, use of oligomers alone also has its drawbacks, such as increased tack-free drying times and increased sag on vertical body panels and reduced redissolving or strike-in resistance of subsequently applied coating layers.

U.S. Patent 4,546,046, to Etzell et al, teaches the preparation of various epsilon-caprolactone modified acrylic polymers for use in high solids, solvent-borne vehicle coatings. However, all of these are relatively low molecular weight (Mn 1,000-6,000) linear resins which still suffer from the drawbacks mentioned above.

Accordingly, there is still a desire to use certain levels of high molecular weight polymers, preferably acrylic polymers, in such compositions for better rheology control and redissolving or strike-in resistance, yet without significantly raising the viscosity or the VOCs of the coating composition.

The present invention is directed to a simple and efficient synthesis of high molecular weight branched acrylic polymers , and high molecular weight branched acrylic polymers which have lower viscosity than their linear analogs, and also which have been chain extended with a cyclic lactone to further enhance the performance attributes mentioned above.

### SUMMARY OF THE INVENTION

Disclosed herein is a polymerization process for making substantially non-gelled branched acrylic polymers, comprising
(a) forming a reaction mixture of:
   (i) at least one monoacrylic monomer;
   (ii) at least one diacrylic or dimethacrylic monomer; and,
   (iii) optionally at least one monomethacrylic monomer, provided that the monomethacrylic monomer comprises no more than 40% by weight of the total monomer mixture;
   (iv) at least one free-radical polymerization initiator; and
   (v) optionally, at least one solvent; and,
(b) maintaining the reaction mixture, under polymerizing conditions, at an elevated reaction temperature of at least 130°C until the non-gelled branched acrylic polymer is formed.

Also disclosed is the above process further comprising (c) chain extending the substantially non-gelled branched acrylic polymer with a cyclic lactone or a cyclic lactone extended monomer either during or after the free-radical initiated polymerization, or a combination thereof.

Further disclosed is the product formed by the aforementioned processes; and a coating composition comprising said product of claim.

Yet additional disclosures of the present invention is an article coated with the aforementioned composition, and a vehicle body or part thereof coated with said composition.

### DETAILED DESCRIPTION OF THE INVENTION

The present invention is directed, in part, to a polymerization process for making substantially non-gelled branched acrylic polymers, comprising (a) forming a reaction mixture of: (i)at least one monoacrylic monomer; (ii) at least one diacrylic or dimethacrylic monomer; and, (iii) optionally at least one monomethacrylic monomer, provided that the monomethacrylic monomer comprises no more than 40% by weight of the total monomer mixture; (iv)at least one free-radical polymerization initiator; and (v) optionally, at least one solvent; and, (b) maintaining the reaction mixture, under polymerizing conditions, at an elevated reaction temperature

In turn, the above process may further comprise chain extending the substantially non-gelled branched acrylic polymer with a cyclic lactone or a cyclic lactone extended monomer either during or after the free-radical initiated polymerization, or a combination thereof. Further details of the process are detailed herein.

In this disclosure, a number of terms and abbreviations are used. The following definitions are provided.

"High molecular weight" is defined as a polymer having a weight average molecular weight "Mw" ranging from about 10,000 to 150,000, more preferably in the range from about 30,000 to 120,000.

All "molecular weights" disclosed herein are determined by gel permeation chromatography "GPC" using polystyrene as the standard.

"Acrylic polymer" means a polymer comprised of polymerized "(meth)acrylate(s)" which mean acrylates and methacrylates, optionally copolymerized with other ethylenically unsaturated monomers to provide desired properties.

"Caprolactone-modified acrylic polymer", also sometimes referred to herein as a "caprolactone-extended acrylic polymer", means a polyester-extended acrylic polymer that has been extended with caprolactone such as epsilon-caprolactone. The polyester chain extension may be at a chain end or it may be at any other point along the acrylic backbone. Of course, one skilled in the art would understand that other cyclic lactones can be used instead of caprolactone and is intended to be included in this definition, unless otherwise indicated.

"Monoacrylic monomer", also sometimes referred to herein as a "monoethylenically unsaturated acrylic monomer", is defined as an acrylic monomer having, on average, one polymerizable acrylic double bond per molecule, and optionally containing one or more non-ethylenically polymerizable functional groups.

"Monomethacrylic monomer", or sometimes referred to as "monoethylenically unsaturated methacrylic monomer", is defined as a methacrylic monomer having, on average, one polymerizable methacrylic double bond per molecule, and optionally containing one or more non-ethylenically polymerizable functional groups.

"Diacrylic monomer", sometimes referred to herein as a "difunctional acrylic monomer", is defined as an acrylic monomer having, on average, two polymerizable acrylic double bonds per molecule, and optionally containing one or more non-ethylenically polymerizable functional groups.

"Dimethacrylic monomer", also sometimes referred to as a "difunctional methacrylic monomer", is defined as a methacrylic monomer having, on average, two polymerizable methacrylic double bonds per molecule, and optionally containing one or more non-ethylenically polymerizable functional groups.

"Substantially non-gelled" or "non-gelled" refers to reaction products that are substantially free of crosslinking and that have a measurable intrinsic viscosity when dissolved in a suitable solvent for the polymer. As is well known in the art, the intrinsic viscosity of a polymer is determined by plotting the reduced viscosity versus the concentration and extrapolating to zero concentration. A gelled reaction product is essentially of infinite molecular weight and will often have an intrinsic viscosity that is too high to measure.

"High solids composition" is defined as a low solvent, solvent-borne liquid coating composition having a total solids content at time of application of at least 40 percent, in weight percentages based on the total weight of the composition.

"Low VOC composition" means a coating composition that has less than about 0.6 kilogram of organic solvent per liter (5 pounds per gallon) of the composition, preferably in the range of less than about 0.42 kilogram of organic solvent per liter (3.5pounds per gallon), as determined under the procedure provided in ASTM D3960.

The present invention provides a simple and efficient means for producing high molecular weight substantially non-gelled branched acrylic polymers, or for producing substantially non-gelled caprolactone-modified branched acrylic polymers. Both are sometimes referred to herein as "highly branched" or "hyper branched" or "branched" acrylic polymers. These branched acrylic polmers have lower viscosity than their linear analogs. These branched acrylic polymers are particularly useful in formulating high solids (low VOC), liquid coating compositions, particularly high quality automotive primers or top coat finishes such as basecoats or clearcoats, that still have useable viscosities at room temperature for practical application in standard equipment, such as the conventional spray equipment found in automotive assembly plants, without the need to further dilute the polymer so produced with solvent to keep the viscosity within practical limits.

While not wishing to be limited by any particular mechanism, it is believed that the high temperature free-radical polymerization process described herein involves so-called "backbiting" which prevents gelation of the monomer mixture. In the polymerization process described herein, it is believed that abstraction of a methine backbone hydrogen occurs to give a tertiary radical which leads to formation of a branching point and ultimately a branched polymer through subsequent monomer addition. Abstraction of the hydrogen from the backbone is believed to occur by intramolecular chain transfer, or so-called backbiting, which best accounts for the observed branching, as opposed to formation of a gelled polymer, as would be expected to occur in classical free radical polymerization that utilizes greater than insignificant amounts of diacrylate or dimethacrylate monomers. Such backbiting reactions in high temperature acrylate polymerization are described more fully in Peck and Grady, Polym. Preprints, 2002, 43(2), 154.

In the present invention, it has been unexpectedly observed that even in the presence of diacrylic or dimethacrylic monomers, higher reaction temperatures favor this backbiting, with little or no gelled polymer being formed. It was previously thought that the presence of large amounts of diacrylic or dimethacrylic monomers in the reaction mixture would cause the reaction mixture to gel. The process disclosed therefore employs rather high reaction temperatures to increase the incidence of backbone hydrogen abstraction and increase the incidence of branching. Increasing the number of branching points on a polymer chain leads to lower viscosity. It is well known that the inherent viscosity of branched polymers is lower than for corresponding linear polymers of equal molecular weight. Therefore, this leads to the attainment of high solids (low VOC) paints with viscosity low enough for practical application such as by spraying, which is a one of the major advantages of the present invention.

The process of the present invention generally results in a branched acrylic polymer, or a caprolactone-modified branched acrylic polymer being present in the final product. The degree of polymerization of the lactone chain extender will also vary depending on the ratio of lactone groups to lactone reactive groups employed in the reaction. The heterogeneity of the resultant polymer will depend on the reactants selected and reactant conditions chosen, as will be apparent to those skilled in the art.

The monoacrylic monomers that are suitable for use in the invention process include, without limitation, the esters of acrylic acid and derivatives and mixtures thereof.

Examples of such monoethylenically unsaturated acrylic monomers that can be employed herein include acrylate esters such as alkyl acrylates that have 1-18 carbon atoms in the alkyl group such as methyl acrylate, ethyl acrylate, n-propyl acrylate, n-butyl acrylate, isopropyl acrylate, isobutyl acrylate; t-butyl acrylate, n-amyl acrylate, n-hexyl acrylate, isoamyl acrylate, 2-ethyl hexyl acrylate, nonyl acrylate, lauryl acrylate, stearyl acrylate, and the like. Cycloaliphatic acrylates can also be used such as cyclohexylacrylate, isobornyl acrylate, t-butyl cyclohexyl acrylate, and the like. Aryl acrylates such as benzyl acrylate, phenyl acrylate, and the like can also be used.

Acrylic acid derivatives that can also be employed as the acrylic monomer include: acrylic acid and its salts, acrylonitrile, acrylamide, N-ethylacrylamide, N,N- diethylacrylamide and acrolein.

Monomethacrylic monomers that are also capable of use herein include, without limitation, the esters of methacrylic acid and derivatives and mixtures thereof.

Examples of such monoethylenically unsaturated methacrylic monomers that can be employed herein include methacrylate esters such as alkyl methacrylates that have 1-18 carbon atoms in the alkyl group such as methyl methacrylate, ethyl methacrylate, n-propyl methacrylate, n-butyl methacrylate, isopropyl methacrylate, isobutyl methacrylate, t-butyl methacrylate, n-amyl methacrylate, n-hexyl methacrylate, isoamyl methacrylate, 2-ethyl hexyl methacrylate, nonyl methacrylate, lauryl methacrylate, stearyl methacrylate, and the like. Cycloaliphatic methacrylates also can be used such as cyclohexyl methacrylate, isobornyl methacrylate, t-butyl cyclohexyl methacrylate, and the like. Aryl methacrylates can also be used such as benzyl methacrylate, phenyl methacrylate, and the like.

Methacrylic acid derivatives that can also be employed include methacrylic acid derivatives such as: methacrylic acid and its salts, methacrylonitrile, methacrylamide, N-methylmethacrylamide, N-ethylmethacrylamide, N,N- diethlymethacrylamide, N,N-dimethylmethacrylamide, N-phenyl-methacrylamide and methacrolein.

For branched acrylic polymers, monoacrylic or monomethacrylic monomer can also include, as shown above, acrylates or methacrylates containing functional groups up to about 65% by weight of the monomer mixture, such as hydroxy, acid, amino, carbamate (i.e., urethane), isocyanate, alkoxy silane such as trimethoxy silane, epoxy and the like, that are unreactive (i.e., non-ethylenically polymerizable) under addition polymerizing conditions. Of course, the amount of functional groups may vary, depending on the final properties desired. Also, one or more of such functional groups are generally desired when the intended end use of the polymer product is in a crosslinkable coating that hardens via condensation reactions. Such functional polymers are usually prepared by polymerization employing a functional monomer or by post-reaction of a polymer of the invention to introduce the desired functionality, as will be apparent to those skilled in the art.

For caprolactone-modified branched acrylic polymer, monoacrylic or monomethacrylic monomer can also, and preferably does, include, as shown above, acrylates or methacrylates containing functional groups up to about 65% by weight of the monomer mixture, such as hydroxyl, acid such as carboxyl, amino, carbamate (i.e., urethane), isocyanate, alkoxy silane such as trimethoxy silane, epoxy and the like, that are unreactive (i.e., non-ethylenically polymerizable) under addition polymerizing conditions. Of course, the amount of functional groups may vary, depending on the final properties desired. Also, as shown above, at the very least, at least one of the monomers used in the invention must contain a hydroxyl, carboxyl or other group containing an active hydrogen capable of reacting with a cyclic lactone for the chain extension portion of the process or it will contain a monomer that has been prereacted with a cyclic lactone. One or more of such these functional groups are also generally desired in the final polymer when the intended end use of the polymer product is in a crosslinkable coating that hardens via condensation reactions. Such functional polymers are usually prepared by polymerization employing a functional monomer or by post-reaction of a polymer of the invention to introduce the desired functionality, as will be apparent to those skilled in the art.

For branched acrylic polymers, typical preferred acrylates and methacrylates for imparting such crosslinking functionality to the polymer include acrylic acid, methacrylic acid, hydroxy alkyl acrylates, and hydroxyl alkyl methacrylates.

For caprolactone-modified branched acrylic polymer typical preferred acrylates and methacrylates for imparting such active hydrogen and optionally crosslinking functionality to the polymer include acrylic acid, methacrylic acid, hydroxy alkyl acrylates, and hydroxyl alkyl methacrylates.

For branched acrylic polymers examples of preferred hydroxy functional monomers include hydroxy alkyl acrylates and methacrylates having 1 to 6 carbon atoms in the alkyl group, such as 2-hydroxyethyl acrylate, hydroxypropyl acrylate (all isomers), hydroxybutyl acrylate (all isomers), 2-hydroxyethyl methacrylate, hydroxypropyl methacrylate (all isomers), hydroxybutyl methacrylate (all isomers) and the like.

For caprolactone-modified branched acrylic polymer examples of preferred hydroxy functional monomers include hydroxy alkyl acrylates and methacrylates having 1 to 6 carbon atoms in the alkyl group, such as 2-hydroxyethyl acrylate, hydroxypropyl acrylate (all isomers), hydroxybutyl acrylate (all isomers), 2-hydroxyethyl methacrylate, hydroxypropyl methacrylate (all isomers), hydroxybutyl methacrylate (all isomers) and the like. Another example of a preferred hydroxy functional monomer is one which has already been reacted with caprolactone such as Tone M-100^{®}, a product of Union Carbide and is a reaction product of one mole of 2-hydroxyethyl acrylate with 2 moles of epsilon-caprolactone.

In the present invention, as was mentioned above, when monomethacrylic monomers are employed in the process, it is desired that the total amount of monomethacrylic monomers in the monomer mixture should not exceed approximately 40% by weight. Higher amounts can be used but at amounts exceeding 40% by weight, such monomers begin to interfere with the backbiting mechanism and thus result in a polymer of a lower degree of branching, as demonstrated by a sharp rise in viscosity, which is undesirable. The products formed at such concentrations are quite viscous and difficult to handle. Amounts not exceeding 30% are generally preferred.

Among the monoethylenically unsaturated acrylic and methacrylic monomers listed above, it is generally desired to include (up to about 70% by weight of the monomer mixture) of at least one bulky monomer selected from the group consisting of isobornyl (meth)acrylate, butyl (meth)acrylates (all isomers), ethyl hexyl(meth)acrylate (all isomers), cyclohexyl(meth)acrylate, or mixture of these monomers, preferably to increase the redissolving or strike-in resistance of the coating composition.

In addition to the acrylic and methacrylic monomers listed above, other non-acrylic monoethylenically unsaturated monomers (up to about 20% by weight of the monomer mixture) may optionally be blended and copolymerized with the above monomers to adjust the final properties of the polymer as desired for a particular application, as will be apparent to those skilled in the art.

Examples of such other suitable polymerizable monoethylenically unsaturated non-acrylic monomers include: vinyl aromatics such as styrene, alpha-methyl styrene, t-butyl styrene, vinyl toluene, and vinyl acetate, and the like and mixtures thereof.

Diacrylic or dimethacrylic monomers suitable for use as a co-monomer in accordance with this invention include, without limitation, the diesters and diamides of acrylic and methacrylic acid.

Examples of such diacrylic and dimethacrylic monomers include ethylene glycol dimethacrylate and diacrylate, diethyleneglycol dimethacrylate and diacrylate, triethyleneglycol dimethacrylate and diacrylate, 1,3-propanediol dimethacrylate and diacrylate, 1,4-butanediol dimethacrylate and diacrylate, 1,6-hexanediol dimethacrylate and diacrylate, 2,2-dimethylpropanediol dimethacrylate and diacrylate, tripropylene glycol dimethacrylate and diacrylate, 1,3-butylene glycol dimethacrylate and diacrylate.

Urethane diacrylates and dimethacrylates can also be used, since they impart in coating applications, increased flexibility to the cured coating layer and reduced brittleness, when used in the correct proportion with the other essential ingredients in coating applications.

The urethane acrylates or methacrylates can be produced by any of the methods known to those skilled in the art. Two typical methods are 1) reacting a diisocyanate with a hydroxy-containing acrylate or hydroxy-containing methacrylate, such as 2-hydroxyethyl acrylate or 2-hydroxyethyl methacrylate; and 2) reacting an isocyanatoalkyl acrylate or an isocyanatomethacrylate with a suitable diol.

As can be seen from the list above, some of these difunctional monomers may also contain a functional group, such as any of those listed above, to impart crosslinking and/or chain extension functionality polymer.

Generally, when the intended end use of the polymer product is in a high solids coating composition, the amount of diacrylic or dimethacrylic monomer(s) will generally not exceed 30% by weight of the total monomer mixture, although this may vary depending on the particular diacrylic or dimethacrylic monomers employed, as well as the composition of the monomer mixture.

In order to chain extend the branched acrylic polymer of this invention with a cyclic lactone, such as epsilon-caprolactone, and preferably further improve the redissolving or strike-in resistance and other properties of the coating composition, at least a portion of the monomers listed above preferably contain a carboxyl and/or hydroxyl group or other group containing an active hydrogen capable of reacting with the cyclic lactone. These monomers are generally used in amounts ranging up to about 65%, preferably from 5 to 40%, more preferably from about 10 to 20%, by weight of the total monomer mixture.

Examples of hydroxyl and carboxyl containing acrylic and methacrylic monomers include any of those mentioned above. Typically, the remainder of the ethylenically unsaturated monomers, if any, contain no carboxyl, hydroxyl groups or other active hydrogen groups.

Once the active hydrogen containing monomer is included in the reaction mixture, several different processing methods can be used to chain extend the branched acrylic polymer with the cyclic lactone and prepare the lactone-modified, also referred to herein as "lactone-extended" or "polyester-modified", branched acrylic polymer. The main differences involve the specific point where the cyclic lactone, preferably epsilon-caprolactone, is introduced.

One method useful in the present invention is to pre-react the desired lactone with the carboxyl or hydroxyl functional ethylenically unsaturated monomer in the presence of a suitable catalyst to form a new lactone extended monomer with an ethylenically unsaturated (preferably acrylic or methacrylic) double bond and a pendant hydroxyl or carboxyl group. The molar ratio of lactone to ethylenically unsaturated carboxyl or hydroxyl monomer can range from about 0.1 to 20 moles, preferably 0.25 to 6 moles, most preferably 1 to 3. A typical example of such a monomer is Tone M-100 ^{®}, a product of Union Carbide which is a reaction product of one mole of 2-hydroxyethyl acrylate with 2 moles of epsilon-caprolactone.

In a second method, the lactone is charged to the reactor along with the organic solvents. These materials are heated to reaction temperature and the ethylenically unsaturated monomers are added along with a free radical catalyst and reacted in the presence of the solvent and the lactone. A catalyst for the lactone polymerization may be added concurrently with the acrylic monomers or may be added prior to the addition of these monomers. The temperature is held for a sufficient time to form the desired chain extended branched acrylic polymer.

In a third method, the branched acrylic polymer is first formed via a high temperature polymerization process. When this process is complete, the desired lactone is then added along with a catalyst for the lactone polymerization and the desired product is formed.

In all cases, the molar ratio of lactone to ethylenically unsaturated carboxyl or hydroxyl monomer added to the reaction mixture can vary. The molar ratio typically ranges from about 0.1 to 20, more preferably from about 0.25 to 6. One skilled in the art would be able to vary the amount of polymerization catalyst, the reaction temperature, and other conditions to affect the lactone polymerization.

In addition to the free radical polymerization catalyst, the polymerization medium could include a polymerization catalyst when epsilon-caprolactone monomer is used in the composition.

Typically this epsilon-caprolactone polymerization catalyst may be an alkali or alkaline earth metal alkoxide, e.g. sodium or calcium methoxide; aluminum isopropoxide, tetraalkyl titanates, titanium chelates and acylates, lead salts and lead oxides, zinc borate, antimony oxide, stannous octoate, organic acids, inorganic acids such as sulfuric, hydrochloric, and phosphoric, and Lewis acids such as boron trifluoride.

Some of the suitable lactones include epsilon-caprolactone; delta-valerolactone; gamma-butyrolactone; and lactones of the corresponding hydroxy carboxylic acids, such as, glycolic acid; lactic acid; 3-hydroxycarboxylic acids, e.g., 3-hydroxypropionic acid, 3-hydroxybutyric acid, 3-hydroxyvaleric acid, and hydroxypyvalic acid. Epsilon-caprolactone is particularly preferred.

In one preferred embodiment of the process of this invention, the preferred monomer charge or monomer mixture for preparing branched acrylic polymers comprises from about 40 to 98% by weight of at least one monoacrylate monomer, from about 1 to 30% of at least one di(meth)acrylate monomer, and from about 1 to 30% of at least one monomethacrylate monomer.

Of these monomers, for the caprolactone-modified branched acrylic polymers, up to 65% of them, preferably from about 10 to 20% of them contain hydroxyl and/or carboxyl functionality that are either pre-reacted with caprolactone, reacted with caprolactone during the addition polymerization, or will be post-reacted to form the caprolactone-extended polymer. The amount of hydroxyl and/or carboxyl functional monomers may vary within the above range, depending on the final properties desired, but at least the polymer should contain sufficient functionality to provide increased redissolving or strike-in resistance in a cured coating layer containing such polymer.

Of these monomers, for the branched acrylic polymers, preferably up to about 65% of them contain hydroxyl, silane, or other functionality to allow the polymer to be crosslinked into the final coating and have the desired high molecular weight but still low viscosity built in the resulting polymer. The amount of such functionality may vary, depending on the final properties desired.

Of course, the total amount of monomers employed in the monomer charge will equal 100% and therefore if an amount equal to or approaching the maximum of one particular monomer is employed, then the relative amounts of the remaining monomers must be reduced accordingly.

One particularly preferred monomer charge for making the above desired branch copolymers includes the following constituents in the above percentage ranges: a monoacrylic monomer which is either isobornyl acrylate or ethylhexyl acrylate or a mixture of these monomers, a diacrylate monomer such as butanediol diacrylate or hexanediol diacrylate, and a hydroxy functional alkyl methacrylate that has 1-4 carbon atoms in the alkyl group such as hydroxy ethyl methacrylate. This branched acrylic polymer can be post treated after polymerization with 1-2 moles of caprolactone per mole of hydroxy groups to give a chain extended hydroxy functional branched acrylic.

Suitable initiators for the free-radical polymerization portion of the process of the present invention can be any of the conventional free-radical initiators commonly known to effect polymerization of acrylic monomers. The initiator should also have the requisite solubility in the reaction medium and monomer mixture. Thermal initiators such as peroxides, or azo compounds are generally preferred.

As will be appreciated by those skilled in the art, thermal initiators should be chosen to have an appropriate half-life at the temperature of polymerization. Specific examples of some suitable thermal initiators include one or more of the following compounds: 2,2'-azobis(isobutyronitrile), 2,2'-azobis(2-cyano-2-butane), dimethyl 2,2'-azobisdimethylisobutyrate, 4,4'-azobis(4-cyanopentanoic acid), 1,1'-azobis(cyclohexanecarbonitrile), 2-(t-butylazo)-2-cyanopropane, 2,2'-azobis[2-methyl-N-(1,1-)bis(hydoxymethyl)-2-hydroxyethyl]propionamide, 2,2'-azobis[2-methyl-N-hydroxyethyl)]-propionamide, 2,2'-azobis(N,N'-dimethyleneisobutyramidine) dihydrochloride, 2,2'-azobis(2-amidinopropane) dihydrochloride, 2,2'-azobis(N,N'-dimethyleneisobutyramine), 2,2'-azobis(2-methyl-N-[1,1-bis(hydroxymethyl)-2-hydroxyethyl]propionamide), 2,2'-azobis(2-methyl-N-[1,1-bis(hydroxymethyl) ethyl]propionamide), 2,2'-azobis[2-methyl-N-(2-hydroxyethyl) propionamide], 2,2'-azobis(isobutyramide) dihydrate, 2,2'-azobis(2,2,4-trimethylpentane), 2,2'-azobis(2-methylpropane), t-butyl peroxyacetate, t-butyl peroxybenzoate, t-butyl peroxyoctoate, t-butyl peroxyneodecanoate, t-butylperoxy isobutyrate, t-amyl peroxypivalate, t-butyl peroxypivalate, diisopropyl peroxydicarbonate, dicyclohexyl peroxydicarbonate, dicumyl peroxide, dibenzoyl peroxide, dilauroyl peroxide, potassium peroxydisulfate, ammonium peroxydisulfate, dit-butyl hyponitrite, dicumyl hyponitrite, cumyl hydroperoxide, t-butyl hydroperoxide.

The free-radical initiators are normally used in amounts from about 0.05 to 8 percent by weight based on the weight of total polymerizable monomer. A preferred range is from 0.05 to 4 percent by weight of total polymerizable monomer.

A solvent is desirable but not essential. Typically, the reaction mixture contains one or more solvents at a level of from about 0 to 75 percent by weight of the reaction mixture, preferably from about 30 to 55 percent by weight of the reaction mixture, with the balance being initiator and the monomer mixture. The selection of a particular solvent and its level of addition are made, based on the monomers selected, the desired applications for the polymer produced and also to assist in controlling reaction parameters. Suitable solvents for the present invention should of course at least be capable of dissolving the monomers and polymer formed therefrom. In general, it is preferred to use as little solvent as possible to minimize the formation of by-products and contaminants.

Most conventional polymerization or reaction solvents may be utilized in the present process to prepare the high molecular weight caprolactone-modified branched acrylic polymers of the instant invention. The higher boiling solvents are preferred due to their low pressure at high temperatures. In general, solvents having a boiling point above 130°C, especially 150°C, are more preferred. Examples of such higher boiling solvents include esters and mixed ethers and esters, Cellosolve (registered trademark of the Union Carbide Corporation), butyl Cellosolve, Cellosolve acetate, the Carbitols (registered trademark of the Union Carbide Corporation), the (poly) alkylene glycol dialkyl ethers and the like.

Any solvent is acceptable as long as the functionality of the solvent does not interfere with the monomer functionality. The reaction may also be run under pressure so that the boiling point of a low boiling solvent can be increased to temperatures desired to produce the polymers of the present invention.

Most conventional polymerization or reaction solvents may be utilized in the present process to prepare the high molecular weight branched acrylic polymers of the instant invention. The higher boiling solvents are preferred due to their low pressure at high temperatures. In general, solvents having a boiling point above 130°C., especially 150°C. are more preferred. Examples of such higher boiling solvents include the aromatic alcohols, such as benzyl alcohol, the toluene alcohols and the like; the alcohol and glycol ethers, esters and mixed ethers and esters, such as diethylene glycol, Cellosolve (registered trademark of the Union Carbide Corporation), butyl Cellosolve, Cellosolve acetate, the Carbitols (registered trademark of the Union Carbide Corporation), the (poly) alkylene glycol dialkyl ethers and the like. Any solvent is acceptable as long as the functionality of the solvent does not interfere with the monomer functionality. The reaction may also be run under pressure so that the boiling point of a low boiling solvent can be increased to temperatures desired to produce the polymers of the present invention.

Further, if there is minimal reaction, some glycols may also be utilized as the reaction solvent including ethylene, propylene and butylene glycols and their various polyether analogs. The aliphatic alcohols, such as hexanol and decanol, can also be used. Further, various hydrocarbon fractions may be utilized with the most preferred being Solvesso 150 or Solvesso 100 (a registered trademark of the Exxon Mobil Oil Company). Aromatic solvents can also be employed, for example, toluene, xylene, cumene, and ethyl benzene.

Further, various hydrocarbon fractions may be utilized in the process to prepare the branched acrylic polymers, or the caprolactone-modified branched acrylic polymers, with the most preferred being Solvesso 150 or Solvesso 100 (a registered trademark of the Exxon Mobil Oil Company). Also, aromatic solvents can also be employed, for example, toluene, xylene, cumene, and ethyl benzene for both processes

In the polymerization process of the invention, the monomers, initiator, and optionally one or more solvents are combined to form a reaction mixture. The order of combining the components of the reaction mixture is not critical to the process of the present invention. For instance, all materials, including the monomers, may be charged together or independently to the polymerization vessel, and mixed in place.

In one preferred embodiment of the process of the present invention, it is desirable to use one or more solvents, heat the solvents to an elevated temperature, and add the monomers and the initiator to the heated solvent to form the reaction mixture.

Polymerization is preferably continued until the resulting polymer has a weight average molecular weight in the range of about 10,000 to 150,000, more preferably in the range from about 30,000 to 120,000. Further addition of initiator may sometimes be necessary to sustain polymerization. It may also be desirable to add an additional amount of solvent to the polymer product while the polymer is at elevated temperature to maintain desirable fluidity and viscosity properties of the polymer product.

The free-radical polymerization portion of the polymerization process of this invention should be carried out at a rather high temperature to allow the requisite branching to occur. Accordingly, as indicated above, the polymerization is carried out at a polymerization temperature of at least 130°C., and is preferably conducted at a temperature at least 150°C, and most preferably at a temperature of at least 160°C, for a sufficient time, as will be apparent to those skilled in the art, typically 2 to 8 hours, to form a substantially non-gelled branched polymer. At temperatures below 130°C., the amount of internal crosslinking increases and relative amount of by-products increases. Furthermore, at too low a reaction temperature, the viscosity of the reaction mixture rapidly increases to a point where the reaction mixture is too viscous to be stirred and the reaction is then difficult to control and must be terminated. When the caprolactone is not included in this high temperature process, it is added to the preformed acrylic polymer along with a polymerization catalyst for the caprolactone and heated to 75°C. to 165°C. for a sufficient time, as will be apparent to those skilled in the art, typically 2 to 8 hours, to form a polymer.

The branched acrylic polymers prepared by the process of the present invention may be used to prepare, for example, as a film-forming binder resin in high solids, high performance automotive coating compositions. These coating compositions usually contain a curing agent such as a polyisocyanate or an alkylated melamine. Such compositions have the advantage of providing excellent redissolving or strike-in resistance, especially in wet-on-wet applications, and other coating properties desirable for automotive finishes.

Accordingly, another embodiment of the present invention is use of the branched acrylic polymers, and caprolactone-modified branched acrylic polymers herein in coating compositions. In turn, these compositions can be used to coat articles.

Yet another embodiment of the present invention is a vehicle body or part thereof coated with the coating compositions described hereinabove.

The following Examples illustrate the invention. All parts and percentages are on a weight basis unless otherwise indicated. All molecular weights disclosed herein are determined by GPC (gel permeation chromatography) using polystyrene as the standard. Unless otherwise specified, all chemicals and reagents can be obtained from Aldrich Chemical Company, Milwaukee, WI.

The following caprolactone-modified branched acrylic polymers were prepared and used as indicated in the Coating Example described hereinafter.

### Example 1

To a 12-liter glass flask equipped with an agitator, thermometer, water condenser, nitrogen inlet and heating mantle was added 1758.6 grams Solvesso 100. This mixture was agitated and heated to reflux. While maintaining the batch at 163°C (reflux), a mixture of 703.4 grams 1,6-hexanediol diacrylate, 3033.6 grams isobornyl acrylate, 659.5 grams hydroxyethyl methacrylate, 44 grams t-butylperoxy acetate, 703.4 grams Solvesso 100 was added over a 300 minute period. Then the reaction mixture was held at reflux for an additional 60 minutes. After the hold period, the reaction mixture was cooled to 120C. A mixture of 885.3 grams epsilon caprolactone, 412.2 grams Solvesso 100 and 3.0 grams dibutyl tin dilaurate was added to the flask over a 30 minute period. After addition was completed the reaction temperature was raised to 150C and held for an additional 3 hours. The weight solids of the resulting polymer solution was 65.8% and the Gardner-Holdt viscosity (ASTM D1545-98) measured at 25°C. was X. Weight average molecular weight of the polymer was 37690 and polydispersity was 11, determined by GPC.

### Coating Example 1

The following components were combined with mixing:

| | Parts by Weight |
|---|---|
| Polymer from Example 1 | 67.01 |
| Cymel^{®} 303¹ (melamine) | 18.68 |
| DDBSA/AMP (1:1.03) (blocked acid catalyst)² | 1.87 |
| Butyl acetate (solvent) | 12.45 |
| Total | 100.0 |

| | |
|---|---|
| 1. Cymel 303 is available from Cytec Industries, West Patterson, NJ 2. The catalyst is available from King Industries, Inc., Norwalk, CT | |

The resulting mixture was drawn down over a 4 x 12" phosphatized cold roll steel panel using a 4 mil blade. The panel was baked 20' x 140°C (285 °F). to form a cured coating film. The test results on the coating film are summarized in the Table below.

| Bake | Tukon Hardness |
|---|---|
| 20' x 140°C. | 13.7 knoops |

The Tukon hardness is determined as given in ATSM D1474.

The results indicate that acceptable high solids coating compositions can be made from the branched acrylic polymers of this invention.

### Example 2

To a 5-liter glass flask equipped with an agitator, thermometer, water condenser, nitrogen inlet and heating mantle was added 800 grams Solvesso 100. This mixture was agitated and heated to 163°C (reflux). While maintaining the batch at reflux, a mixture of 360 grams 1,6-hexanediol diacrylate, 1340 grams isobornyl acrylate, 360 grams hydroxyethyl methacrylate, 20 grams t-butylperoxy acetate, 320 grams Solvesso 100 was added over a 300 minute period. Then the reaction mixture was held at reflux for an additional 60 minutes. The weight solids of the resulting polymer solution was 67.5% and the Gardner-Holdt viscosity (ASTM D1545-98) measured at 25°C. was Z2. Weight average molecular weight of the polymer was 54,550 and polydispersity was 15, determined by GPC.

### Example 3

To a 1 -liter glass flask equipped with an agitator, thermometer, water condenser, nitrogen inlet and heating mantle was added 200 grams Solvesso 100. This mixture was agitated and heated to reflux. While maintaining the batch at reflux; a mixture of 75 grams 1,6-hexanediol diacrylate, 300 grams isobornyl acrylate, 50 grams 2-ethyl hexyl acrylate, 75 grams hydroxyethyl methacrylate, 5 grams t-butylperoxy acetate, 80 grams Solvesso 100 was added over a 300 minute period. Then the reaction mixture was held at reflux for an additional 60 minutes. The weight solids of the resulting polymer solution was 66.9% and the Gardner-Holdt viscosity measured at 25°C. was X. Weight average molecular weight of the polymer was 20,000 and polydispersity was 7, determined by GPC.

### Example 4

To a 5-liter glass flask equipped with an agitator, thermometer, water condenser, nitrogen inlet and heating mantle was added 800 grams Solvesso 100. This mixture was agitated and heated to reflux. While maintaining the batch at reflux, a mixture of 260 grams 1,4-butanediol diacrylate, 1440 grams 2-ethyl hexyl acrylate, 300 grams hydroxyethyl methacrylate, 20 grams t-butylperoxy acetate, 320 grams Solvesso 100 was added over a 300 minute period. Then the reaction mixture was held at reflux for an additional 60 minutes. The weight solids of the resulting polymer solution was 65.3% and the Gardner-Holdt viscosity measured at 25°C. was 1. Weight average molecular weight of the polymer was 20,500 and polydispersity was 6.5, determined by GPC.

### Example 5

To a 5-liter glass flask equipped with an agitator, thermometer, water condenser, nitrogen inlet and heating mantle was added 509.6 grams Solvesso 100. This mixture was agitated and heated to reflux. While maintaining the batch at reflux, a mixture of 229.3 grams 1,6-hexanediol diacrylate, 853.5 grams isobornyl acrylate, 191.1 grams hydroxyethyl acrylate, 19.0 grams t-butylperoxy acetate, 203.8 grams Solvesso 100 was added over a 300 minute period. Then the reaction mixture was held at reflux for an additional 60 minutes. The weight solids of the resulting polymer solution was 68.95% and the Gardner-Holdt viscosity measured at 25°C. was Y + 1/2. Weight average molecular weight of the polymer was 13,000 and polydispersity was 5.2, determined by GPC.

### Example 6

To a 5-liter glass flask equipped with an agitator, thermometer, water condenser, nitrogen inlet and heating mantle was added 509.6 grams Solvesso 100. This mixture was agitated and heated to reflux. While maintaining the batch at reflux, a mixture of 293.0 grams 1,6-hexanediol diacrylate, 789.8 grams Isobornyl acrylate, 191.1 grams hydroxyethyl acrylate, 19.0 grams t-butylperoxy acetate, 203.8 grams Solvesso 100 was added over a 300 minute period. Then the reaction mixture was held at reflux for an additional 60 minutes. The weight solids of the resulting polymer solution was 68.5% and the Gardner-Holdt viscosity measured at 25°C. was Z3 + 1/2. Weight average molecular weight of the polymer was 44,765 and polydispersity was 14.1, determined by GPC.

### Example 7

To a 5-liter glass flask equipped with an agitator, thermometer, water condenser, nitrogen inlet and heating mantle was added 509.6 grams Solvesso 100. This mixture was agitated and heated to reflux. While maintaining the batch at reflux, a mixture of 229.3 grams 1,6-hexanediol diacrylate, 726.1 grams isobornyl acrylate, 127.4 grams N-butyl methacrylate, 191.1 grams hydroxyethyl methacrylate, 19.0 grams t-butylperoxy acetate, 203.8 grams Solvesso 100 was added over a 300 minute period. Then the reaction mixture was held at reflux for an additional 60 minutes. The weight solids of the resulting polymer solution was 66.25% and the Gardner-Holdt viscosity measured at 25°C. was Z2. Weight average molecular weight of the polymer was 66,600 and polydispersity was 21, determined by GPC.

### Example 8

To a 5-liter glass flask equipped with an agitator, thermometer, water condenser, nitrogen inlet and heating mantle was added 509.6 grams Solvesso 100. This mixture was agitated and heated to reflux. While maintaining the batch at reflux, a mixture of 229.3 grams 1,6-hexanediol diacrylate, 598.7 grams isobornyl acrylate, 254.8 grams N-butyl methacrylate, 191.1 grams hydroxyethyl acrylate, 19.0 grams t-butylperoxy acetate, 203.8 grams Solvesso 100 was added over a 300 minute period. Then the reaction mixture was held at reflux for an additional 60 minutes. The weight solids of the resulting polymer solution was 65.9% and the Gardner-Holdt viscosity measured at 25°C. was Z4 - 1/4. Weight average molecular weight of the polymer was 123,800 and polydispersity was 36, determined by GPC.

### Example 9

To a 5-liter glass flask equipped with an agitator, thermometer, water condenser, nitrogen inlet and heating mantle was added 509.6 grams Solvesso 150. This mixture was agitated and heated to reflux. While maintaining the batch at reflux, a mixture of 229.3 grams 1,6-hexanediol diacrylate, 853.5 grams isobornyl acrylate, 191.1 grams hydroxyethyl methacrylate, 19.0 grams t-butylperoxy acetate, 203.8 grams Solvesso 150 was added over a 300 minute period. Then the reaction mixture was held at reflux for an additional 60 minutes. The weight solids of the resulting polymer solution was 69.24% and the Gardner-Holdt viscosity measured at 25°C. was Z + 1/4. Weight average molecular weight of the polymer was 12,747 and polydispersity was 7.3, determined by GPC.

### Example 10

To a 5-liter glass flask equipped with an agitator, thermometer, water condenser, nitrogen inlet and heating mantle was added 509.6 grams Solvesso 100. This mixture was agitated and heated to 150C. While maintaining the batch at 150C, a mixture of 229.3 grams 1,6-hexanediol diacrylate, 853.5 grams isobornyl acrylate, 191.1 grams hydroxyethyl methacrylate, 19.0 grams t-butylperoxy acetate, 203.8 grams Solvesso 100 was added over a 300 minute period. Then the reaction mixture was held at 150C for an additional 60 minutes. The weight solids of the resulting polymer solution was 66.14% and the Gardner-Holdt viscosity measured at 25°C. was Z4 + 1/2. Weight average molecular weight of the polymer was 86,649 and polydispersity was 24.3, determined by GPC.

### Coating Example 2

The following components were combined with mixing:

| | |
|---|---|
| Polymer from Example 6 | 102.2 grams |
| Cymel^{®} 1168 (melamine) | 30.0 grams |
| DDBSA/AMP (1:1.03) (blocked acid catalyst) | 2.3 grams |
| Flow additive (acrylic copolymer) | 1.0 grams |
| Solvesso^{®} 100 (solvent) | 50.0 grams |

The resulting mixture was drawn down over a 4 x 12" phosphatized cold roll steel panel using a 4 mil blade. One panel was baked 20' x 121°C (250 °F). and the other panel was baked 20' x 140°C (285°F). to form a cured coating film. The test results on the coating film are summarized in the Table below.

| Bake | Tukon Hardness |
|---|---|
| 20' x 121°C. | 12.8 knoops |
| 20' x 140°C. | 15.3 knoops |

The results indicate that acceptable high solids coating compositions can be made from the branched acrylic polymers of this invention.

This invention is not limited by the illustrative embodiments set forth herein, but rather is defined by the following claims.

## Claims

1. A polymerization process for making substantially non-gelled branched acrylic polymers, comprising
(a) forming a reaction mixture of:
(i) at least one monoacrylic monomer;
(ii) at least one diacrylic or dimethacrylic monomer; and,
(iii) optionally at least one monomethacrylic monomer, provided that the monomethacrylic monomer comprises no more than 40% by weight of the total monomer mixture;
(iv) at least one free-radical polymerization initiator; and
(v) optionally, at least one solvent; and,
(b) maintaining the reaction mixture, under polymerizing conditions, at an elevated reaction temperature of at least 130°C until the non-gelled branched acrylic polymer is formed.

2. The process of claim 1 wherein said process further comprises (c) chain extending the branched acrylic polymer with a cyclic lactone or a cyclic lactone extended monomer either during or after the free-radical initiated polymerization, or a combination thereof.

3. The process of claim 1 wherein step (c) comprises providing at least one of said monomers in the total monomer mixture with a functional group capable of reacting with a cyclic lactone and reacting the monomer with a cyclic lactone either prior to, during or after the free-radical initiated polymerization, or a combination thereof.

4. The process of claim 2 wherein step (c) comprises providing at least one of said monomers in the total monomer mixture with a carboxyl and/or hydroxyl group and/or other non-ethylenically polymerizable group containing an active hydrogen capable of reacting with a cyclic lactone and reacting the monomer with a cyclic lactone either prior to, during or after the free-radical initiated polymerization, or a combination thereof.

5. The process of claim 1 wherein step (c) comprises either (i) adding at least one epsilon-caprolactone containing acrylic or methacrylic monomer to the reaction mixture of (a) before polymerization, or (ii) treating the reaction mixture containing at least one hydroxy acrylic or methacrylic monomer with epsilon-caprolactone during or after polymerization (b).

6. The process of claim 1 wherein at least one of the monomers in the total monomer mixture contains one or more functional groups selected from the group consisting of hydroxy, acid, amino, carbamate, isocyanate, alkoxy silane, and epoxy groups.

7. The process of claim 2 wherein the cyclic lactone is epsilon-caprolactone.

8. The process of claim 1 or claim 2 wherein the total amount of diacrylic or dimethacrylic monomer comprises no more than 30% of the monomer mixture.

9. The process of claim 1 wherein the reaction mixture comprises at least one other non-acrylic monoethylenically unsaturated monomer.

10. The process of claim 1, wherein the mixture of monomers employed in (a) comprises:
(i) from about 40 to 98 percent by weight, based on the weight of total polymerizable monomer, of at least one monoacrylic monomer, optionally containing one or more functional groups that are non-ethylenically polymerizable;
(ii) from about 1 to 30 percent by weight, based on the weight of total polymerizable monomer, of at least one diacrylic or dimethacrylic monomer, optionally containing one or more functional groups that are non-ethylenically polymerizable; and
(iii) from about 1 to 30 percent by weight, based on the weight of total polymerizable monomer, of at least one monomethacrylic monomer, optionally containing one or more functional groups that are non-ethylenically polymerizable.

11. The process of claim 2, wherein the mixture of monomers employed in (a) comprises:
(i) from about 40 to 98 percent by weight, based on the wight of total polymerizable monomer, of at least one monoacrylic monomer, optionally containing one or more functional groups that are non-ethylenically polymerizable;
(ii) from about 1 to 30 percent by weight, based on the weight of total polymerizable monomer, of at least one diacrylic or dimethacrylic monomer, optionally containing one or more functional groups that are non-ethylenically polymerizable; and,
(iii) from about 1 to 30 percent by weight, based on the weight of total polymerizable monomer, of at least one monomethacrylic monomer, optionally containing one or more functional groups that are non-ethylenically polymerizable;
wherein about 65% by weight of the monomers employed in the total monomer mixture containing hydroxyl, carboxyl group or other active hydrogen are lactone-extended by
(1) pre-reacting the lactone with the hydroxyl, carboxyl group or other active hydrogen; or
(2) charging the lactone to the reaction mixture of claim 2, step (a); or
(3) adding the lactone and a catalyst, suitable for lactone polymerization, after forming the non-gelled branched acrylic polymer of claim 2, step (b) and performing a lactone polymerization.

12. The product formed by the process of claim 1 or claim 11.

13. A coating composition comprising the product of claim 12.

14. The coating composition of claim 13, said coating composition comprising: a film-forming binder and less than 50% by weight, based on the total composition weight, of a volatile organic solvent, wherein the binder contains about 1-100% by weight of said acrylic polymer.

15. The coating composition of claim 14 where said coating composition is a solventborne clear coating or a color coating for a color-plus-clear coat finish.

16. An article coated with the composition of claim 14.

17. A vehicle body or part thereof coated with the composition of claim 14.

## Patentansprüche

1. Polymerisationsverfahren zur Herstellung von praktisch nicht gelierten verzweigten Acrylpolymeren, wobei das Verfahren aufweist:
(a) Ausbilden eines Reaktionsgemischs aus:
(i) mindestens einem Monoacrylmonomer;
(ii) mindestens einem Diacryl- oder Dimethacrylmonomer; und
(iii) wahlweise mindestens einem Monomethacrylmonomer, vorausgesetzt, daß das Monomethacrylmonomer nicht mehr als 40 Gew.-% des gesamten Monomergemischs bildet;
(iv) mindestens einen Radikalkettenpolymerisationsinitiator; und
(v) wahlweise mindestens ein Lösungsmittel; und
(b) Halten des Reaktionsgemischs unter Polymerisationsbedingungen auf einer erhöhten Reaktionstemperatur von mindestens 130°C, bis das nicht gelierte verzweigte Acrylpolymer gebildet wird.

2. Verfahren nach Anspruch 1, wobei das Verfahren ferner aufweist: (c) eine Kettenverlängerung des verzweigten Acrylpolymers mit einem cyclischen Lacton oder einem mit cyclischem Lacton verlängerten Monomer entweder während oder nach der radikalisch initiierten Polymerisation, oder eine Kombination davon.

3. Verfahren nach Anspruch 1, wobei der Schritt (c) aufweist: Bereitstellen mindestens eines der Monomere in dem gesamten Monomergemisch mit einer funktionellen Gruppe, die mit einem cyclischen Lacton reaktionsfähig ist, und Reaktion des Monomers mit einem cyclischen Lacton entweder vor, während oder nach der radikalisch initiierten Polymerisation, oder eine Kombination davon.

4. Verfahren nach Anspruch 2, wobei der Schritt (c) aufweist: Bereitstellen mindestens eines der Monomere in dem gesamten Monomergemisch mit einer Carboxyl- und/oder Hydroxylgruppe und/oder einer anderen nichtethylenisch polymerisierbaren, einen aktiven Wasserstoff enthaltenden Gruppe, die mit einem cyclischen Lacton reaktionsfähig ist, und Reaktion des Monomers mit einem cyclischen Lacton entweder vor, während oder nach der radikalisch initiierten Polymerisation, oder eine Kombination davon.

5. Verfahren nach Anspruch 1, wobei der Schritt (c) aufweist: entweder (i) Beimengen mindestens eines □-Caprolacton enthaltenden Acryl- oder Methacryl-Monomers zu dem Reaktionsgemisch von (a) vor der Polymerisation, oder (ii) Behandeln des Reaktionsgemischs, das mindestens ein Hydroxyacryl- oder -methacrylmonomer enthält, mit □-Caprolacton während oder nach der Polymerisation (b).

6. Verfahren nach Anspruch 1, wobei mindestens eines der Monomere in dem gesamten Monomergemisch eine oder mehrere funktionelle Gruppen enthält, die aus der Gruppe ausgewählt sind, die aus Hydroxy-, Säure-, Amino-, Carbamat-, Isocyanat-, Alkoxysilan- und Epoxygruppen besteht.

7. Verfahren nach Anspruch 2, wobei das cyclische Lacton □-Caprolacton ist.

8. Verfahren nach Anspruch 1 oder Anspruch 2, wobei der Gesamtanteil des Diacryl- oder Dimethacryl-Monomers nicht mehr als 30% des Monomergemischs bildet.

9. Verfahren nach Anspruch 1, wobei das Reaktionsgemisch mindestens ein weiteres monethylenisch ungesättigtes Nicht-Acryl-Monomer aufweist.

10. Verfahren nach Anspruch 1, wobei das in (a) verwendete Monomergemisch aufweist:
(i) etwa 40 bis 98 Gew.-%, bezogen auf das Gewicht des gesamten polymerisierbaren Monomers, mindestens eines Monoacryl-Monomers, das wahlweise eine oder mehrere funktionelle Gruppen enthält, die nichtethylenisch polymerisierbar sind;
(ii) etwa 1 bis 30 Gew.-%, bezogen auf das Gewicht des gesamten polymerisierbaren Monomers, mindestens eines Diacryl- oder Dimethacryl-Monomers, das wahlweise eine oder mehrere funktionelle Gruppen enthält, die nichtethylenisch polymerisierbar sind; und
(iii) etwa 1 bis 30 Gew.-%, bezogen auf das Gewicht des gesamten polymerisierbaren Monomers, mindestens eines Monomethacryl-Monomers, das wahlweise eine oder mehrere funktionelle Gruppen enthält, die nichtethylenisch polymerisierbar sind.

11. Verfahren nach Anspruch 2, wobei das in (a) verwendete Monomergemisch aufweist:
(i) etwa 40 bis 98 Gew.-%, bezogen auf das Gewicht des gesamten polymerisierbaren Monomers, mindestens eines Monoacryl-Monomers, das wahlweise eine oder mehrere funktionelle Gruppen enthält, die nichtethylenisch polymerisierbar sind;
(ii) etwa 1 bis 30 Gew.-%, bezogen auf das Gewicht des gesamten polymerisierbaren Monomers, mindestens eines Diacryl- oder Dimethacryl-Monomers, das wahlweise eine oder mehrere funktionelle Gruppen enthält, die nichtethylenisch polymerisierbar sind; und
(iii) etwa 1 bis 30 Gew.-%, bezogen auf das Gewicht des gesamten polymerisierbaren Monomers, mindestens eines Monomethacryl-Monomers, das wahlweise eine oder mehrere funktionelle Gruppen enthält, die nichtethylenisch polymerisierbar sind;
wobei etwa 65 Gew.-% der in dem gesamten Monomergemisch verwendeten Monomere, die eine Hydroxylgruppe, einer Carboxylgruppe oder anderen aktiven Wasserstoff enthalten, durch
(1) vorherige Reaktion des Lactons mit der Hydroxyl-, Carboxylgruppe oder einem anderen aktiven Wasserstoff; oder
(2) Eintragen des Lactons in das Reaktionsgemisch von Anspruch 2, Schritt (a); oder
(3) Hinzufügen des Lactons und eines zur Lacton-Polymerisation geeigneten Katalysators nach der Bildung des nicht gelierten verzweigten Acrylpolymers gemäß Anspruch 2, Schritt (b), und Durchführen einer Lacton-Polymerisation,
mit Lacton (ketten-)verlängert werden.

12. Durch das Verfahren nach Anspruch 1 oder Anspruch 11 gebildetes Produkt.

13. Beschichtungszusammensetzung, die das Produkt nach Anspruch 12 aufweist.

14. Beschichtungszusammensetzung nach Anspruch 13, wobei die Beschichtungszusammensetzung aufweist: ein filmbildendes Bindemittel und weniger als 50 Gew.-% bezogen auf das Gewicht der gesamten Zusammensetzung, eines flüchtigen organischen Lösungsmittels, wobei das Bindemittel etwa 1-100 Gew.-% des Acrylpolymers enthält.

15. Beschichtungszusammensetzung nach Anspruch 14, wobei die Beschichtungszusammensetzung ein lösungsmittelhaltiger Klarlack oder ein farbiger Lack für einen aus farbigem Lack und Klarlack bestehenden Anstrich ist.

16. Artikel, der mit der Zusammensetzung nach Anspruch 14 beschichtet ist.

17. Fahrzeugkarosserie oder Teil davon, beschichtet mit der Zusammensetzung nach Anspruch 14.

## Revendications

1. Procédé de polymérisation pour rendre substantiellement non gélifiés des polymères acryliques ramifiés, comprenant
(a) la formation d'un mélange réactionnel de:
(i) au moins un monomère de type monoacrylique;
(ii) au moins un monomère de type diacrylique ou diméthacrylique; et,
(iii) éventuellement au moins un monomère de type monométhacrylique, à condition que le monomère de type monométhacrylique ne comprenne pas plus de 40 % en poids du mélange total de monomères;
(iv) au moins un initiateur de polymérisation radicalaire; et
(v) éventuellement, au moins un solvant; et,
(b) le maintien du mélange réactionnel, sous des conditions de polymérisation, à une température réactionnelle élevée d'au moins 130°C jusqu'à ce que le polymère acrylique ramifié non gélifié soit formé.

2. Procédé selon la revendication 1, dans lequel ledit procédé comprend en outre (c) l'extension de chaîne du polymère acrylique ramifié avec une lactone cyclique ou un monomère étendu à l'aide d'une lactone cyclique soit pendant, soit après la polymérisation radicalaire, ou une combinaison des deux.

3. Procédé selon la revendication 1, dans lequel l'étape (c) comprend la fourniture d'au moins l'un desdits monomères dans le mélange total de monomères avec un groupe fonctionnel capable de réagir avec une lactone cyclique et la réaction du monomère avec une lactone cyclique soit avant, soit pendant, soit après la polymérisation radicalaire, ou une combinaison de ces procédés.

4. Procédé selon la revendication 2, dans lequel l'étape (c) comprend la fourniture d'au moins l'un desdits monomères dans le mélange total de monomères avec un groupe carboxyle et/ou hydroxyle et/ou un autre groupe non éthyléniquement polymérisable contenant un hydrogène actif capable de réagir avec une lactone cyclique et la réaction du monomère avec une lactone cyclique soit avant, soit pendant, soit après la polymérisation radicalaire, ou une combinaison de ces procédés.

5. Procédé selon la revendication 1, dans lequel l'étape (c) comprend soit (i) l'addition d'au moins un monomère de type acrylique ou méthacrylique contenant une epsilon-caprolactone au mélange réactionnel de (a) avant la polymérisation, ou (ii) le traitement du mélange réactionnel contenant au moins un monomère hydroxy acrylique ou méthacrylique avec une epsilon-caprolactone durant ou après la polymérisation (b).

6. Procédé selon la revendication 1, dans lequel au moins l'un des monomères dans le mélange total de monomères contient un ou plusieurs groupe(s) fonctionnel(s) choisi(s) parmi le groupe constitué des groupes hydroxy, acide, amino, carbamate, isocyanate, alcoxy silane, et époxy.

7. Procédé selon la revendication 2, dans lequel la lactone cyclique est l'epsilon-caprolactone.

8. Procédé selon la revendication 1 ou la revendication 2, dans lequel la quantité totale de monomère de type diacrylique ou diméthacrylique comprend pas plus de 30 % du mélange de monomères.

9. Procédé selon la revendication 1, dans lequel le mélange réactionnel comprend au moins un autre monomère de type non acrylique monoéthyléniquement insaturé.

10. Procédé selon la revendication 1, dans lequel le mélange de monomères utilisé dans (a) comprend:
(i) d'environ 40 à 98 pour cent en poids, basé sur le poids du monomère polymérisable total, d'au moins un monomère de type monoacrylique, contenant éventuellement un ou plusieurs groupe(s) fonctionnel(s) qui est(sont) non éthyléniquement polymérisable(s);
(ii) d'environ 1 à 30 pour cent en poids, basé sur le poids du monomère polymérisable total, d'au moins un monomère de type diacrylique ou diméthacrylique, contenant éventuellement un ou plusieurs groupe(s) fonctionnel(s) qui est(sont) non éthyléniquement polymérisable(s); et
(iii) d'environ 1 à 30 pour cent en poids, basé sur le poids du monomère polymérisable total, d'au moins un monomère de type monométhacrylique, contenant éventuellement un ou plusieurs groupe(s) fonctionnel(s) qui est(sont) non éthyléniquement polymérisable(s).

11. Procédé selon la revendication 2, dans lequel le mélange de monomères utilisé dans (a) comprend:
(i) d'environ 40 à 98 pour cent en poids, basé sur le poids du monomère polymérisable total, d'au moins un monomère monoacrylique, contenant éventuellement un ou plusieurs groupe(s) fonctionnel(s) qui est(sont) non éthyléniquement polymérisable(s);
(ii) d'environ 1 à 30 pour cent en poids, basé sur le poids du monomère polymérisable total, d'au moins un monomère de type diacrylique ou diméthacrylique, contenant éventuellement un ou plusieurs groupe(s) fonctionnel(s) qui est(sont) non éthyléniquement polymérisable(s); et,
(iii) d'environ 1 à 30 pour cent en poids, basé sur le poids du monomère polymérisable total, d'au moins un monomère de type monométhacrylique, contenant éventuellement un ou plusieurs groupe(s) fonctionnel(s) qui est(sont) non éthyléniquement polymérisable(s);
dans lequel environ 65 % en poids des monomères utilisés dans le mélange total de monomères contenant un groupe hydroxyle, carboxyle ou un autre hydrogène actif sont étendus à l'aide d'une lactone par
(1) la pré-réaction de la lactone avec le groupe hydroxyle, carboxyle ou un autre hydrogène actif; ou
(2) la charge de la lactone au niveau du mélange réactionnel selon la revendication 2, l'étape (a); ou
(3) l'addition de la lactone et d'un catalyseur approprié à la polymérisation de la lactone, après la formation du polymère acrylique ramifié non gélifié selon la revendication 2, étape (b) et la réalisation de la polymérisation de la lactone.

12. Produit formé par le procédé selon la revendication 1 ou la revendication 11.

13. Composition de revêtement comprenant le produit selon la revendication 12.

14. Composition de revêtement selon la revendication 13, ladite composition de revêtement comprenant: un liant formant film et moins de 50 % en poids, basé sur le poids total de la composition, d'un solvant organique volatil, dans laquelle le liant contient environ 1 à 100 % en poids dudit polymère acrylique.

15. Composition de revêtement selon la revendication 14, où ladite composition de revêtement est un revêtement clair à base de solvant ou un revêtement coloré pour une finition couleur-plus-revêtement clair.

16. Article revêtu de la composition selon la revendication 14.

17. Carrosserie automobile ou pièce de celle-ci revêtue de la composition selon la revendication 14.
